# FASCICULE DE BREVET EUROPEEN

(11) **EP 3 017 325 B1**
(45) Date de publication et mention de la délivrance du brevet: **26.09.2018**
(21) Numéro de dépôt: 14750553.1
(22) Date de dépôt: 04.07.2014
(51) Int. Cl.: G02B 1/11

(54) **ARTICLE OPTIQUE A COULEUR DE REFLET RESIDUEL ROUGE**
OPTISCHER ARTIKEL MIT ROTER RESTREFLEXIONSFARBE
OPTICAL ARTICLE HAVING A RED RESIDUAL REFLECTION COLOUR

(30) Priorité: 05.07.2013 FR 1356668
(43) Date de publication de la demande: 11.05.2016
(73) Titulaire: Essilor International, 94220 Charenton-le-Pont (FR)
(72) Inventeur: ARROUY, Frédéric, F-94220 Charenton le Pont (FR); DE AYGUAVIVES, Francisco, F-94220 Charenton-le-Pont (FR); DIEGUEZ, Ivan, F-94220 Charenton-le-Pont (FR)
(74) Mandataire: Jacobacci Coralis Harle
(86) Numéro de dépôt international: PCT/FR2014/051735
(87) Numéro de publication internationale: WO 2015/001278

(56) Documents cités:
- WO-A1-2007/080342
- US-A1- 2013 038 834

## Description

La présente invention concerne d'une manière générale un article, transparent notamment un article d'optique, telle qu'une lentille ophtalmique, comprenant un empilement interférentiel présentant une couleur chromatique perçue de reflet résiduel homogène.

En particulier, l'invention concerne un article, telle qu'une lentille ophtalmique comportant deux faces principales, une face avant et une face arrière, au moins une de ces deux faces principales comprend un empilement interférentiel, en particulier un empilement anti-reflet, dont la couleur chromatique perçue de reflet résiduel est de coloration homogène rouge.

Il est d'usage de déposer sur des lentilles ophtalmiques des empilements anti-reflet permettant de diminuer le facteur moyen de réflexion dans le visible.

Ce type de revêtement permet de rendre le regard du porteur des lentilles plus visible pour un observateur. En outre, il améliore le confort du porteur en supprimant notamment les reflets parasites, l'éblouissement et en améliorant la perception des contrastes.

Les revêtements anti-reflet présentent le plus souvent une couleur résiduelle.

Cette couleur résiduelle est perçue par la personne faisant face au porteur de la lentille.

Chaque lentille ophtalmique à propriété anti-reflet disponible commercialement sous une marque donnée présente une couleur résiduelle qui lui est propre et dont chaque fabricant doit assurer la reproductibilité, afin que la couleur perçue soit sensiblement identique d'une lentille à l'autre, c'est-à-dire que deux lentilles issues de la fabrication ne peuvent être distinguées et leurs reflets résiduels sont considérés comme identiques par un observateur.

Cette couleur résiduelle se situe généralement dans le domaine du vert, mais d'autres couleurs comme une couleur jaune (or) ou violet sont également courantes.

Cependant certaines couleurs résiduelles, telles que le rouge, sont plus délicate et difficile à réaliser.

D'une part, d'un point de vue de la conception d'une lentille, il est en effet difficile de trouver un empilement interférentiel, notamment anti-reflet, dont la perception de la couleur dans le visible apparaisse comme « rouge » par un observateur. Les revêtements anti-reflets existants qui ont pour but de présenter une telle couleur chromatique perçue de reflet résiduel apparaissaient plutôt dans des colorations soit trop orange, soit trop rose.

D'autre part, lors de la réalisation de lentilles en phase de production, les conditions de dépôt de l'empilement interférentiel sont soumises à une certaine variabilité. Les conditions de dépôts dépendent en effet par exemple : du type de substrat utilisé, du paramétrage de la machine (ex : programmation de la montée en température, paramétrage du canon à électron, etc) et/ou de son mode d'utilisation, du changement de machine de fabrication (les paramètres de mises en oeuvre pourront en effet très légèrement différer d'une machine à une autre), ou encore de la zone géographique (par exemple, un taux d'humidité différent entre deux pays peut affecter le paramétrage de la machine). Ces différents facteurs de variabilité peuvent ainsi entrainer des modifications non négligeables sur les propriétés finales du verre de lentille, comme notamment une dispersion colorimétrique de la couleur de l'empilement interférentiel qui va généralement s'étendre du « orange » au « rose », au lieu du rouge, d'une lentille à une autre. La couleur résiduelle perçue est ainsi difficilement reproductible.

On connait de l'état de la technique la demande de brevet WO 2007/080342 qui décrit une lentille ophtalmique comprenant un substrat transparent au moins partiellement teinté ayant une face avant et une face arrière, la face avant comportant un premier revêtement anti-reflet et la face arrière comportant un second revêtement anti-reflet, les deux revêtement résiduels présentant une couleur chromatique perçue de reflet résiduel.

En particulier, le premier revêtement anti-reflet possède un facteur de réflexion lumineux Rv ≤ 2,5%, un angle de teinte h mesurée dans le système colorimétrique CIE L*, a*, b* entre 310° et 30°, ce qui correspond à la couleur de reflet résiduel perçue « rose », et une valeur de Chroma C₁* ≥ 15, de préférence C₁* ≥ 17. Selon, un exemple de réalisation, ce premier revêtement anti-reflet lorsqu'il présente une couleur perçue de reflet résiduel « rose » possède un angle de teinte h de 355° et une valeur de Chroma C₁* de 18,5.

Cependant, ce document ne décrit pas l'obtention d'un revêtement anti-reflet présentant une couleur chromatique perçue de reflet résiduel « rouge ».

Il existe ainsi un besoin de fournir une lentille ophtalmique, traitée d'un empilement interférentiel, tel qu'un anti-reflet, présentant une couleur perçue de reflet résiduel qui soit « rouge » et homogène sur l'ensemble de la lentille, notamment au niveau des surfaces courbées, tout en étant aisément reproductible.

La présente invention a ainsi pour but de proposer un nouvel article, en particulier un article optique qui évite tout ou partie des inconvénients précités.

Pour le reste de la description, à moins qu'il n'en soit spécifié autrement, l'indication d'un intervalle de valeurs « de X à Y », dans la présente invention, s'entend comme incluant les valeurs X et Y.

A cet effet, la présente invention a pour objet un article transparent tel que décrit en revendication 1 et comprenant un substrat comprenant au moins une face avant et une face arrière, au moins une de ces deux faces principales étant revêtue d'un revêtement interférentiel présentant un reflet résiduel et ayant une valeur de réflexion dans le visible Rᵥ inférieure ou égale à 97%, de préférence 50% caractérisé en ce que ledit revêtement interférentiel possède un angle de teinte h et une valeur de Chroma C* (dans le système colorimétrique CIE L*, a*, b*) aptes à conférer au reflet résiduel une même couleur chromatique perçue dans le rouge répondant aux conditions suivantes : l'angle de teinte h va de 0° à 40° et la valeur de chroma C* est supérieure ou égale à 20,
dans lequel le revêtement interférentiel comprend un empilement à partir du substrat d'au moins quatre couches présentant les épaisseurs physiques suivantes :
- de 100 à 120 nm pour la couche de haut indice de réfraction,
- de 110 à 140 nm pour la couche de bas indice de réfraction,
- de 75 à 95 nm pour la couche de haut indice de réfraction,
- de 55 à 77 nm pour la couche de bas indice de réfraction, et
dans lequel une couche à haut indice de réfraction présente un indice de réfraction supérieur ou égal à 1,50 et une couche de bas indice de réfraction comprend un indice de réfraction inférieur à 1,50.

Selon l'invention, la face avant d'un article ou d'un substrat, est la face qui, lors de l'utilisation, est la plus éloignée de l'oeil de l'utilisateur. Il s'agit généralement d'une face convexe. Inversement, la face arrière de l'article ou du substrat est celle qui, lors de l'utilisation, est la plus proche de l'oeil de l'utilisateur. Il s'agit généralement d'une face concave.

Selon l'invention, l'emploi d'un revêtement interférentiel possédant, pour une même couleur perçue de reflet résiduel, un angle de teinte h de 0° à 40° et une valeur de Chroma C* supérieure ou égale à 20 (et de préférence inférieure ou égale à 50), permet d'obtenir un article optique présentant un revêtement interférentiel dont la perception de la couleur dans le visible apparaît rouge pour un observateur et non plus orange ou rose comme cela était le cas dans l'état de la technique. Ainsi, la Demanderesse a réussi à surmonter la difficulté de conception d'une telle lentille.

La couleur perçue de ce reflet résiduel rouge est de plus homogène sur la totalité de la surface de l'article sur lequel le revêtement interférentiel selon l'invention est déposé, même au niveau des surfaces courbées. Par « homogène », on entend que l'intensité et/ou la nuance de la couleur du reflet résiduel ne varie pas ou de façon négligeable sur l'ensemble du revêtement interférentiel de l'article transparent (même couleur ou couleur similaire de reflet résiduel perçu).

En outre, il est également apparu que la réalisation de l'article à l'échelle industrielle ne modifiait pas la couleur chromatique perçue de reflet résiduel rouge et ce, malgré les facteurs de variabilité inhérents aux conditions de dépôt du revêtement interférentiel sur l'article (bonne fiabilité industrielle). Sans vouloir être lié par une quelconque théorie, il semble que le revêtement interférentiel présente une couleur de reflet résiduel qui soit suffisamment saturée en couleur pour stabiliser l'angle de teinte du revêtement entre 0° et 40° lors du dépôt du revêtement interférentiel sur l'article.

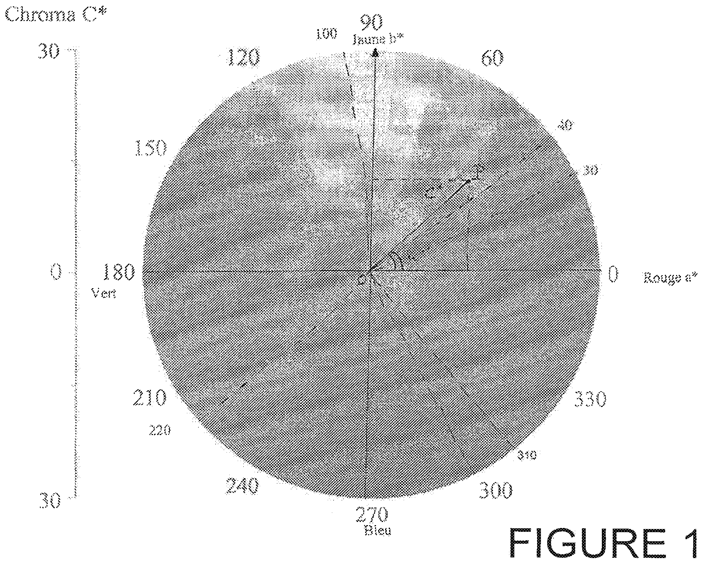

Les caractéristiques colorimétriques, (Chroma C*, angle de teinte h) dans l'ensemble de la demande sont définies dans le système CIE L*a*b* 1976, avec l'observateur standard 10° et l'illuminant D65, à un angle d'incidence de 15°. Le système colorimétrique CIE L*a*, b* est illustré sur la figure 1. L'observateur standard est également défini dans le système CIE L*a*b*.

En se référant à la figure 1, une couleur selon le système CIE est définie par un point P de coordonnés a* (mesurant la variation du rouge au vert), b* (mesurant la variation du jaune au bleu), un angle de teinte h (ou nuance) qui est l'angle de OP avec l'axe des a* et la Chroma (ou saturation) C* qui est égale à la longueur du segment OP.

L'angle de teinte h traduit la sensation de couleur et la Chroma C* exprime la sensation de pureté chromatique, c'est-à-dire la position sur une échelle qui va du noir au blanc "achromatique", dépourvu de toute tonalité, à la couleur saturée, "monochromatique", de tonalité complètement pure.

Par « couleur chromatique perçue », on entend une couleur perçue comme possédant une tonalité chromatique.

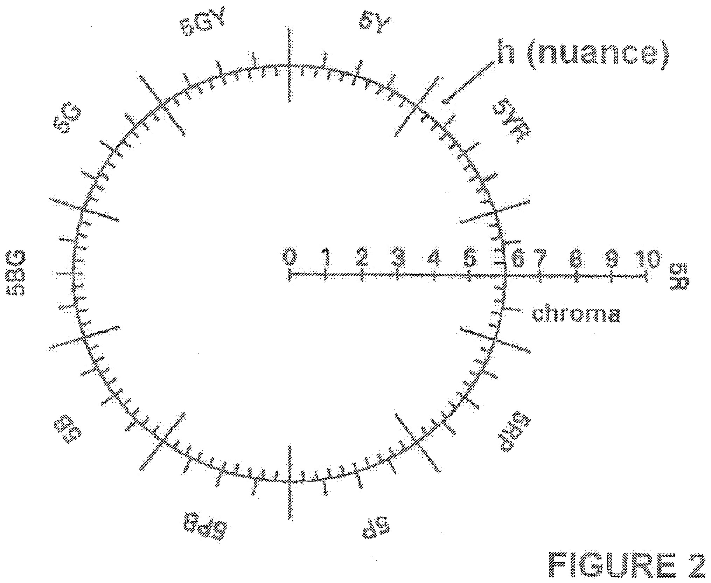

La « tonalité chromatique » (ou teinte) est l'attribut de la sensation dans le visible qui a suscité des dénominations de couleurs telles que : bleu, vert, jaune, rouge, pourpre, etc. Un exemple de couleurs perçues comme étant d'une même tonalité chromatique est donné par l'atlas de Munsell qui est illustré sur la figure 2. L'atlas de Munsell définit dix (10) secteurs de teintes principales (de 32°) bâties à partir du bleu (B), du vert (G), du jaune (Y), du rouge (R) et du pourpre (P) comme le montre la figure 2.

Dans le cadre de la présente invention, on désigne par "même couleur chromatique perçue de reflet résiduel rouge », une couleur chromatique perçue ayant une même tonalité chromatique rouge.

L'appréciation de la couleur chromatique perçue est réalisée selon le protocole d'observation suivant :
Les articles d'optique sont placés dans une armoire à lumière normalisée (éclairement 1000 Lux, source normalisée reproduisant l'illuminant D65). Le fond de l'armoire est d'un gris neutre de clarté L*= 50 (recommandation CIE). Les articles d'optique sont observés à une distance de 50 cm par un observateur emmétrope et sous un angle d'observation de 15°.

La face de l'article à examiner est positionnée le plus près de l'oeil de l'observateur.

Dans le cas d'une lentille ophtalmique, si l'on observe la couleur de la réflexion de l'empilement interférentiel de la lentille se situant sur sa face avant, soit la face convexe, celle-ci sera orientée de façon à ce qu'elle soit la face la plus proche de l'observateur.

Si l'on observe la couleur de la réflexion de l'empilement interférentiel de la lentille se situant sur sa face arrière, soit la face concave, celle-ci sera orientée de façon à ce qu'elle soit la face la plus proche de l'observateur.

Les valeurs d'angle de teinte h sont de 0° à 40°. Compte tenu des fluctuations inhérentes au procédé de dépôt lors de la fabrication de l'article optique, ces valeurs de h permettent notamment d'obtenir une bonne reproductibilité du revêtement interférentiel.

Selon un premier mode de réalisation, les valeurs d'angle de teinte h peuvent être les suivantes : de 5°à 40°, de préférence de 5 à 35°, de manière plus préférée de 10 à 30°, notamment de 15° à 30° et typiquement de 15 à 25°. Selon ce mode de réalisation, h peut ne pas comprendre la valeur de 30° et/ou être, par exemple, strictement inférieur à 30°.

Selon un second mode de réalisation, les valeurs d'angle de teinte h se situe de 30° à 40°. Selon ce mode de réalisation, h peut être en particulier strictement supérieur à 30° (à savoir, exclusion possible de la valeur h=30°).

Avantageusement, la valeur de Chroma C* du revêtement interférentiel est supérieure ou égale à 30, de préférence est strictement supérieure à 30.

Généralement, la valeur de Chroma C* du revêtement interférentiel est inférieure ou égale à 50, mieux inférieure ou égale à 45 45 et peut aller de 30 à 50, de préférence 30 à 45, mieux de 35 à 45 et en particulier de 39 à 45.

Le revêtement interférentiel est également caractérisé par un facteur de réflexion lumineux dans le visible Rᵥ Ce facteur Rᵥ tient compte de la fonction d'efficacité lumineuse relative spectrale de l'oeil. Le facteur de réflexion lumineux Rᵥ est tel que défini dans la norme ISO 13666:1998, et mesuré conformément à la norme ISO 8980-4 (2000-06-01) à un angle d'incidence de 15°. Il s'agit de la moyenne pondérée de la réflectivité spectrale sur l'ensemble du spectre lumineux visible compris entre 380 nm et 780 nm.

Ce facteur de réflexion dans le visible Rᵥ est selon l'invention inférieure ou égale à 97%, de préférence inférieur ou égale à 50%.

Par valeur de réflexion dans le visible Rᵥ inférieure ou égale à 97%, on entend un valeur inférieure ou égale à 97%, 96%, 95%, 90%, 85%, 80%, 75%, 70%, 65%, 60%, 55%, 50%, 45%, 40%, 35%, 30%, 25%, 20%, 15%, 10%, 8%, 7%, 6%, 5%, 4%, 3%, 2,5%, 2%, 1,5%.

En particulier, Rᵥ peut présenter les valeurs suivantes : Rv≤40%, de préférence Rv≤30%, en particulier Rv≤20% et typiquement Rv≤10%,

Lorsque le facteur de réflexion dans le visible Rᵥ < 2,5%, le revêtement interférentiel est dit anti-reflet (AR) ; lorsque le facteur de réflexion dans le visible Rᵥ ≥ 2,5%, le revêtement interférentiel est dit « à effet miroir ».

Ainsi, selon un premier mode de réalisation, le revêtement est à effet miroir et Rv présente une valeur allant de préférence de 4% à 10%. Généralement, Rv présente une valeur inférieure ou égale à 4%, notamment Rᵥ est inférieure ou égale à 3%.

Selon un second mode de réalisation, le facteur de réflexion dans le visible satisfait la relation suivante : 2%≤ Rᵥ ≤ 2,5%.

De préférence, le revêtement interférentiel selon l'invention est un revêtement anti-reflet (AR) et Rᵥ < 2,5%.

Comme cela est bien connu, le revêtement interférentiel, préférentiellement anti-reflet (AR), convenant pour la présente invention, comprend généralement un empilement de couches alternées d'indice de réfraction élevée et d'indice de réfraction bas.

Par couche d'indice de réfraction élevée (dit HI), on entend une couche présentant un indice de réfraction supérieur ou égal à 1,50, de préférence supérieur ou égal à 1,60, mieux supérieur ou égal à 1,8, et en particulier de 1,8 à 2,2 ; et par couche d'indice de réfraction bas (dit LI), on entend une couche présentant un indice de réfraction inférieure à 1,50, de préférence inférieure à 1,48. Sauf indication contraire, tous les indices de réfractions indiqués dans la présente demande de brevet sont exprimés pour une longueur d'onde de référence de 550 nm et à une température de 25°C.

Généralement, les couches HI à haut indice de réfraction comprennent, sans limitation, un ou plusieurs oxydes de métal, tels que TiO₂, PrTiO₃, LaTiO₃, ZrO₂, Ta₂O₅, Y₂O₃, Ce₂O₃, La₂O₃, Dy₂O₅, Nd₂O₅, HfO₂, Sc₂O₃, Pr₂O₃ or Al₂O₃, et Si₃N₄, ou un de leurs mélanges, de préférence ZrO₂, TiO₂, ou Pr₂O₃, et en particulier ZrO₂. Les couches à haut indice de réfraction peuvent éventuellement comprendre des matériaux à bas indice de réfraction, tels que SiO₂. Evidemment, le ou les mélanges de ces matériaux sont tels que la couche résultante présente un indice de réfraction tel que défini ci-dessus, à savoir supérieure ou égale à 1,50.

Les couches BI à bas indice de réfraction sont bien connues et comprennent par exemple et sans limitation, SiO₂, SiOₓ avec 1≤x<2, MgF₂, ZrF₄, Al₂O₃, AlF₃, chiolite (Na₃Al₃F₁₄), cryolite (Na₃[AlF₆]), ou un de leurs mélanges, de préférence SiO₂ ou SiO₂ dopé avec Al₂O₃ qui permet d'accroître la température critique de l'empilement. En particulier, la couche à bas indice de réfraction comprend SiO₂. Egalement, le ou les mélanges de ces matériaux sont tels que la couche résultante présente un indice de réfraction tel que défini ci-dessus, à savoir inférieure à 1,50.

Lorsque le mélange SiO₂/Al₂O₃ est utilisé, la couche à bas indice de réfraction contient de préférence de 1 à 10%, en particulier de 1 à 8% et encore mieux de 1 à 5% en poids de Al₂O₃ par rapport au poids total de silice et d'alumine dans cette couche. Une proportion trop grande d'alumine peut être en effet préjudiciable à l'adhésion du revêtement anti-reflet.

Par exemple, des couches de SiO₂ dopée avec 4% ou moins d'Al₂O₃ en masse, ou une couche de SiO₂ dopée avec 8% d'Al₂O₃ peuvent être employées. Des mélanges SiO₂ / Al₂O₃ disponibles dans le commerce peuvent être utilisés, tels que le LIMA® commercialisé par UMICORE MATERIALS AG (indice de réfraction compris entre 1,48 et 1,50), ou la substance L5® commercialisée par MERCK KGaA (indice de réfraction égale à 1,48 pour une longueur d'onde de 500 nm).

Typiquement, le ou les couches à bas indice sont constituées de SiO₂ et le ou les couches d'indice de réfraction élevé sont constituées de ZrO₂.

De préférence, le revêtement anti-reflet selon l'invention comprend un même nombre de couches à haut et à bas indice de réfraction.

Généralement, le revêtement anti-reflet comprend de 4 à 6 couches, typiquement 4 couches, sans prendre en compte une éventuelle sous-couche.

Dans une réalisation particulièrement préférée, le revêtement anti-reflet comprend, en partant de la face du substrat, une première couche d'indice de réfraction élevé en ZrO₂, une deuxième couche de bas indice de réfraction en SiO₂, une troisième couche d'indice de réfraction élevé en ZrO₂ et une quatrième couche de bas indice de réfraction en SiO₂.

Selon l'invention, le revêtement interférentiel comprend un empilement successif à partir du substrat d'au moins quatre couches présentant les épaisseurs physiques suivantes :
- de 100 à 120 nm pour la couche de haut indice de réfraction, comme ZrO₂
- de 110 à 140 nm pour la couche de bas indice de réfraction, comme SiO₂ ;
- de 75 à 95 nm pour la couche de haut indice de réfraction, comme ZrO₂ ;
- de 55 à 77 nm pour la couche de bas indice de réfraction, comme SiO₂.

En général, le rapport (épaisseur physique totale des couches de bas indice de réfraction) / (épaisseur physique totale des couches de haut indice de réfraction) des couches du revêtement anti-reflet varie de 0,6 à 1 ,2.

Sauf indication contraire, toutes les épaisseurs de couches divulguées dans la présente demande sont des épaisseurs physiques, et non des épaisseurs optiques.

Les matériaux utilisés pour réaliser un revêtement interférentiel à effet miroir peuvent être les mêmes que ceux précédemment cités pour le revêtement anti-reflet.

De préférence encore, le revêtement interférentiel, tel que le revêtement anti-reflet est déposé sur une sous-couche d'accrochage, par exemple en SiO₂, entre l'empilement de couches alternées de haut et de bas indice de réfraction et la face du substrat.

Cette sous-couche d'accrochage a en général une épaisseur de 50 à 250 nm.

Le dépôt des couches des revêtements interférentiels comme un revêtement anti-reflet peut s'effectuer par tous moyens connus tel que par évaporation, éventuellement assisté par faisceaux ioniques, par pulvérisation par faisceaux d'ions, par pulvérisation cathodique, ou par dépôt chimique en phase vapeur assisté par plasma ou par évaporation dans une enceinte sous vide.

Le dépôt des couches des revêtements interférentiels, comme un revêtement anti-reflet, est de préférence effectué par pulvérisation cathodique haute pression.

Le substrat de la lentille ophtalmique selon l'invention est de préférence en verre organique, par exemple une matière plastique thermoplastique ou thermodurcissable.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclo-oléfines tels que les copolymères éthylène/norbornène ou éthylène/cyclopentadiène et leurs combinaisons.

Par (co)polymère, on entend un copolymère ou un homopolymère. Par (méth)acrylate, on entend un acrylate ou un méthacrylate. Par polycarbonate (PC), on entend au sens de la présente invention aussi bien les homopolycarbonates que les copolycarbonates et les copolycarbonates séquencés.

Les substrats particulièrement recommandés sont les substrats obtenus par (co)polymérisation du bis allyl carbonate du diéthylèneglycol, vendu, par exemple, sous la dénomination commerciale CR-39® par la société PPG Industries (lentilles ORMA® ESSILOR), ou par polymérisation des monomères thio(méth)acryliques, tels que ceux décrits dans la demande de brevet français FR 2734827. Les substrats peuvent être obtenus par polymérisation de mélanges des monomères ci-dessus, ou peuvent encore comprendre des mélanges de ces polymères et (co)polymères.

D'autres substrats préférés sont les polycarbonates.

Le ou les revêtements interférentiels selon l'invention, comme un revêtement anti-reflet, présentant une couleur perçue de reflet résiduel rouge peuvent être déposés sur le substrat nus, c'est-à-dire dont les faces principales ne comportent aucun revêtement, ou sur des substrats déjà revêtus, c'est-à-dire que les faces principales comportent un ou plusieurs revêtements fonctionnels.

En effet, un revêtement qui est "sur" le substrat ou qui a été déposé "sur" le substrat est défini comme un revêtement qui :
(i) est positionné au-dessus d'une des faces principales du substrat nu,
(ii) n'est pas nécessairement en contact avec le substrat, c'est-à-dire qu'un ou plusieurs revêtements intermédiaires, généralement fonctionnels, peuvent être disposés entre le substrat nu et le revêtement en question, et
(iii) ne recouvre pas nécessairement complètement la face principale du substrat.

Les revêtements fonctionnels sont bien connus et comprennent à titre d'exemple un primaire pour l'adhérence et/ou la résistance au choc et/ou un revêtement résistant à l'abrasion et/ou un revêtement polarisant et/ou un revêtement photochromique.

Parmi les primaires résistant au choc, on peut citer les revêtements à base de méthacrylate et à base de polyuréthane.

Des revêtements résistant au choc à base de (méth)acrylate sont, entre autres, décrits dans le brevet US-5,015,523, cependant que les revêtements de résine polyuréthane thermoplastique et réticulée sont décrits entre autres, dans les brevets japonais 63-141001 et 63-87223, EP 0404111 et US-5,316,791.

Des revêtements de primaires résistant au choc préférés sont des revêtements à base de composition de latex tel qu'un latex poly(méth)acrylique, un latex de polyuréthane ou un latex de polyester.

Parmi les revêtements primaires résistant au choc à base de (méth)acrylate préféré, on peut citer les matériaux à base de polyéthylèneglycol(méth)acrylate tels que, par exemple, le tétraéthylèneglycoldiacrylate, le polyéthylèneglycol(200)diacrylate, le polyéthylèneglycol(400)diacrylate, le polyéthylèneglycol(600)di(méth)acrylate, ainsi que les (méth)acrylateuréthanes, ou un de leurs mélanges.

Parmi les compositions de revêtements de primaire résistant au choc préférées, on peut également citer les latex acryliques commercialisés sous la dénomination acrylique latex A-639 par ZENECA et les latex polyuréthanes commercialisés sous les désignations W-240 et W-234 par BAXENDEN.

Parmi les revêtements anti-abrasion préférés, on peut citer ceux obtenus par durcissement d'une composition comprenant des époxyalcoxysilanes ou un hydrolysat de ceux-ci avec un acide et un agent de durcissement.

Des exemples de telles compositions sont données dans les brevets US-4,211,823, US-5,015,523 et la demande internationale WO 94/10230.

Les compositions de revêtement anti-abrasion préférées sont celles comprenant comme constituants principaux un époxyalcoxysilane tel que par exemple le γ-glycidoxypropyltriméthoxylsilane (GLYMO® commercialisé par la société Degussa Huis) et un dialkyldialcoxysilane tel que par exemple, le diméthyldiéthoxysilane, de la silice colloïdale et une quantité catalytique d'un catalyseur de durcissement tel qu'un acétyle acétonate d'aluminium ou un hydrolysat de ceux-ci, le reste de la composition étant essentiellement composé des solvants classiquement utilisés pour leur formulation.

Les compositions des revêtements polarisants et/ou photochromiques sont bien connues dans la technique.

Par exemple, les revêtements photochromiques peuvent comporter des agents photochimiques choisis parmi les spirooxazines et les naphtopyranes. De tels revêtements sont décrits entre autres dans les brevets US 6,281,366; EP 0772798 ; US 6,019,914 et US 7,186,359.

Les substrats peuvent être des substrats non colorés ou des substrats colorés par introduction de pigments dans la masse, dans un revêtement déposé sur le substrat ou par tout autre moyen (imbibition,..) .De préférence, les substrats sont non colorés.

Dans un mode de réalisation, les substrats sont eux-mêmes colorés avec un pigment rouge renforçant l'effet du revêtement interférentiel selon l'invention.

Le ou les revêtements interférentiels, préférentiellement anti-reflets peuvent eux-mêmes être revêtus d'un revêtement anti-salissure, tel qu'un revêtement hydrophobe et/ou oléophobe. Ces revêtements anti-salissure sont également bien connus dans la technique et sont habituellement à base de fluorosilicone ou fluorosilazane, c'est-à-dire des silicones ou des silazanes comportant des groupes contenant du fluor.

Un exemple d'un tel matériau préféré est le produit commercialisé par SHIN-ETSU sous la désignation KP 801 M®.

On peut utiliser également un matériau Optool DSX® commercialisé par la société Daikin.

Selon une caractéristique de l'invention, le revêtement interférentiel selon l'invention ayant une couleur perçue de reflet résiduel rouge est, de préférence, disposé uniquement sur la face avant de l'article.

Selon une autre caractéristique de l'invention, les deux faces principales de l'article, comme la face avant et la face arrière, peuvent comporter le revêtement interférentiel selon l'invention tel que décrit ci-dessus.

Généralement, l'article est un article optique, telle qu'une lentille ophtalmique.

La lentille ophtalmique selon l'invention est préférentiellement un verre de lunette.

Les exemples suivants, non limitatifs, illustrent la présente invention.

### Exemples

A titre d'exemple, on donne ci-après dans le tableau 1, les caractéristiques de deux lentilles selon l'invention présentant sur leur face principale avant un revêtement anti-reflet AR ayant une couleur de reflet résiduel rouge.

Les valeurs de h, C* et Rv sont données dans l'Espace colorimétrique CIE 1976 LAB avec observateur 10° et illuminant D65.

**Tableau 1**

| **Exemples lentilles** | **Empilement des couches AR (épaisseur physique en nm) à partir du substrat** | **h** | **C*** | **Rv(%)** |
|---|---|---|---|---|
| Ex. 1 | ZrO₂ (106,9), SiO₂ (130,8), ZrO₂ (83,5), SiO₂ (64,5) | 0° | 39,8 | 2,19 |
| Ex. 2 | ZrO₂ (113,4), SiO₂ (119,9), ZrO₂ (87,4), SiO₂ (63,7) | 15° | 39,4 | 2,16 |

L'indice de réfraction de SiO₂ est de 1, 473 et celui de ZrO₂ est de 2 à 550 nm et à 25°C.

Le substrat utilisé est une lentille ORMA® en verre organique constitué d'un polymère de diéthylèneglycol bis (allylcarbonate) (CR39®), d'une épaisseur au centre de 2 mm.

Le revêtement anti-abrasion est tel que décrit dans l'exemple 3 du brevet EP614957. Il est obtenu en faisant tomber goutte à goutte 80,5 parties d'acide chlorhydrique 0,1 N dans une solution contenant 224 parties de GLYMO et 120 parties de DMDES. La solution hydrolysée est agitée 24 heures à température ambiante puis on ajoute 718 parties de silice colloïdale à 30 % dans le méthanol, 15 parties d'acétylacétonate d'aluminium et 44 parties d'éthylcellosolve. On ajoute une petite quantité d'agent tensio-actif. L'extrait sec théorique (EST) de la composition renferme de l'ordre de 13 % en matière solide provenant du DMDES hydrolysé.

Chaque substrat est revêtu de la composition de revêtement anti-abrasion par dip coating, puis soumis à une précuisson de 15 minutes à 60°C. Ils sont ensuite passés à l'étuve pendant 3 heures.

L'épaisseur du revêtement anti-abrasion varie généralement de 2 à 4 micromètres.

Ensuite, pour chaque lentille, le revêtement anti-abrasion est revêtu par évaporation dans une enceinte à vide, d'un revêtement anti-reflet (Rv < 2.5%) comprenant un empilement, à partir du substrat, de couche à haut indice de réfraction (ZrO₂) et de bas indice de réfraction (SiO₂). En fonction de la lentille (ex 1 ou 2), et comme cela est illustré dans le tableau 1, l'épaisseur de chaque couche de haut et de bas indice de réfraction est différente. Il est à noter que des variations d'épaisseurs de ces couches, qui peuvent usuellement survenir lors de la fabrication des empilements, n'entrainent que de faibles variations des valeurs de h, de chroma C* et de Rv.

### Résultat :

Les lentilles 1 et 2 sont ensuite observées selon le protocole d'observation décrit précédemment.

Elles sont perçues avec un reflet résiduel rouge pour l'observateur se trouvant en face de la lentille.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Article transparent comprenant un substrat comprenant au moins une face avant et une face arrière, au moins une de ces deux faces principales étant revêtue d'un revêtement interférentiel présentant un reflet résiduel et ayant une valeur de réflexion dans le visible Rᵥ inférieure ou égale à 97 %, **caractérisé en ce que** ledit revêtement interférentiel possède un angle de teinte h et une valeur de chroma C* aptes à conférer au reflet résiduel une même couleur chromatique perçue dans le rouge répondant aux conditions suivantes : l'angle de teinte h va de 0° à 40° et la valeur de chroma C* est supérieure ou égale à 20,
dans lequel le revêtement interférentiel comprend un empilement à partir du substrat d'au moins quatre couches présentant les épaisseurs physiques suivantes :
- de 100 à 120 nm pour la couche de haut indice de réfraction,
- de 110 à 140 nm pour la couche de bas indice de réfraction,
- de 75 à 95 nm pour la couche de haut indice de réfraction,
- de 55 à 77 nm pour la couche de bas indice de réfraction, et
dans lequel une couche à haut indice de réfraction présente un indice de réfraction supérieur ou égal à 1,50 et une couche de bas indice de réfraction comprend un indice de réfraction inférieur à 1,50.

2. Article selon la revendication 1, dans lequel la valeur de chroma C* est inférieure ou égale à 50.

3. Article selon la revendication 1 ou la revendication 2, dans lequel la valeur de chroma C* est supérieure ou égale à 30, de préférence est strictement supérieure à 30.

4. Article selon l'une des revendications précédentes, dans lequel l'angle de teinte va de 5° à 40°, de préférence de 5° à 35°.

5. Article selon l'une des revendications précédentes, ayant une valeur de réflexion dans le visible Rᵥ ≤ 30 %, de préférence Rᵥ ≤ 20 %, en particulier Rᵥ ≤10 %.

6. Article selon l'une des revendications 1 à 4, dans lequel le revêtement interférentiel est un revêtement antireflet et présente une valeur Rᵥ < 2,5 %.

7. Article selon l'une quelconque des revendications 1 à 4 et 6, dans lequel le revêtement interférentiel comprend un empilement de couches alternées d'indice de réfraction élevé supérieur ou égal à 1,8 et d'indice de réfraction bas, inférieur à 1,48.

8. Article selon l'une des revendications 1 à 7, dans lequel la ou les couches de bas indice de réfraction sont constituées de SiO₂ et la ou les couches d'indice de réfraction élevé sont constituées de ZrO₂.

9. Article selon l'une des revendications précédentes, dans lequel au moins une des deux faces principales du substrat est déjà revêtue d'un ou de plusieurs revêtements fonctionnels choisi parmi : une couche de primaire pour l'adhérence et/ou la résistance au choc, un revêtement résistant à l'abrasion, et/ou un revêtement polarisant, un revêtement photochrome.

10. Article selon l'une des revendications précédentes, dans lequel le revêtement interférentiel est revêtu d'un revêtement anti-salissure, tel qu'un revêtement hydrophobe et/ou oléophobe.

11. Article selon l'une des revendications précédentes, **caractérisé en ce que** le revêtement interférentiel est disposé uniquement sur la face avant de l'article.

12. Article selon l'une des revendications précédentes, **caractérisé en ce que** le revêtement interférentiel est disposé sur la face avant et sur la face arrière de l'article.

13. Article selon l'une des revendications précédentes, dans lequel l'article est un article d'optique, en particulier une lentille ophtalmique.

14. Article selon l'une des revendications 1 à 4 et 7 à 13, dans lequel ledit revêtement interférentiel a une valeur de réflexion dans le visible Rᵥ inférieure ou égale à 50 %.

## Patentansprüche

1. Durchsichtiger Artikel, der ein Substrat umfasst, welches wenigstens eine Vorderseite und eine Rückseite umfasst, wobei wenigstens eine dieser zwei Hauptseiten mit einer Interferenzbeschichtung beschichtet ist, die einen Restreflex aufweist und einen Reflexionswert im sichtbaren Bereich Rᵥ hat, der kleiner oder gleich 97 % ist, **dadurch gekennzeichnet, dass** die Interferenzbeschichtung einen Bunttonwinkel h und einen Chromawert C* besitzt, die geeignet sind, dem Restreflex ein und dieselbe, im Rotbereich wahrgenommene chromatische Farbe zu verleihen, und den folgenden Bedingungen genügen: Der Bunttonwinkel h beträgt 0° bis 40° und der Chromawert C* ist größer oder gleich 20, wobei die Interferenzbeschichtung, ausgehend von dem Substrat, einen Stapel von wenigstens vier Schichten umfasst, welche die folgenden physischen Dicken aufweisen:
- 100 bis 120 nm für die Schicht mit hohem Brechungsindex,
- 110 bis 140 nm für die Schicht mit niedrigem Brechungsindex,
- 75 bis 95 nm für die Schicht mit hohem Brechungsindex,
- 55 bis 77 nm für die Schicht mit niedrigem Brechungsindex, und
wobei eine Schicht mit hohem Brechungsindex einen Brechungsindex aufweist, der größer oder gleich 1,50 ist, und eine Schicht mit niedrigem Brechungsindex einen Brechungsindex aufweist, der kleiner als 1,50 ist.

2. Artikel nach Anspruch 1, wobei der Chromawert C* kleiner oder gleich 50 ist.

3. Artikel nach Anspruch 1 oder Anspruch 2, wobei der Chromawert C* größer oder gleich 30 ist und vorzugsweise Streng größer als 30 ist.

4. Artikel nach einem der vorhergehenden Ansprüche, wobei der Bunttonwinkel 5° bis 40° beträgt, vorzugsweise 5° bis 35°.

5. Artikel nach einem der vorhergehenden Ansprüche, der einen Reflexionswert im sichtbaren Bereich Rᵥ ≤ 30 % aufweist, vorzugsweise Rᵥ ≤ 20 %, insbesondere Rᵥ ≤ 10 %.

6. Artikel nach einem der Ansprüche 1 bis 4, wobei die Interferenzbeschichtung eine Antireflexbeschichtung ist und einen Wert Rᵥ < 2,5 % aufweist.

7. Artikel nach einem der Ansprüche 1 bis 4 und 6, wobei die Interferenzbeschichtung einen Stapel von sich abwechselnden Schichten mit hohem Brechungsindex, der größer oder gleich 1,8 ist, und mit niedrigem Brechungsindex, der kleiner als 1,48 ist, umfasst.

8. Artikel nach einem der Ansprüche 1 bis 7, wobei die Schicht oder die Schichten mit niedrigem Brechungsindex aus SiO₂ bestehen und die Schicht oder die Schichten mit hohem Brechungsindex aus ZrO₂ bestehen.

9. Artikel nach einem der vorhergehenden Ansprüche, wobei wenigstens eine der zwei Hauptseiten des Substrats bereits mit einer oder mehreren funktionalen Beschichtungen beschichtet ist, die ausgewählt sind aus: einer Grundierungsschicht für die Haftung und/oder die Stoßfestigkeit, einer abriebfesten Beschichtung und/oder einer polarisierenden Beschichtung, einer photochromen Beschichtung.

10. Artikel nach einem der vorhergehenden Ansprüche, wobei die Interferenzbeschichtung mit einer schmutzabweisenden Beschichtung beschichtet ist, wie etwa einer hydrophoben und/oder oleophoben Beschichtung.

11. Artikel nach einem der vorhergehenden Ansprüche, **dadurch gekennzeichnet, dass** die Interferenzbeschichtung ausschließlich auf der Vorderseite des Artikels angeordnet ist.

12. Artikel nach einem der vorhergehenden Ansprüche, **dadurch gekennzeichnet, dass** die Interferenzbeschichtung auf der Vorderseite und auf der Rückseite des Artikels angeordnet ist.

13. Artikel nach einem der vorhergehenden Ansprüche, wobei der Artikel ein optischer Artikel ist, insbesondere eine ophthalmische Linse.

14. Artikel nach einem der Ansprüche 1 bis 4 und 7 bis 13, wobei die Interferenzbeschichtung einen Reflexionswert im sichtbaren Bereich Rᵥ hat, der kleiner oder gleich 50 % ist

## Claims

1. A transparent article comprising a substrate comprising at least one front face and one back face, at least one of these two main faces being coated with an interference coating having a residual reflection and having a reflectance in the visible Rᵥ lower than or equal to 97%, **characterized in that** said interference coating possesses a hue angle h and a chroma C* that are able to give the residual reflection a given chromatic color perceived in the red satisfying the following conditions: the hue angle h is ranging from 0° to 40° and the chroma C* is higher than or equal to 20,
wherein said interference coating comprises a stack from the substrate of at least four layers having the following physical thicknesses:
- from 100 to 120 nm for the high refractive index layer;
- from 110 to 140 nm for the low refractive index layer;
- from 75 to 95 nm for the high refractive index layer; and
- from 55 to 77 nm for the low refractive index layer, and
wherein a high refractive index layer has a refractive index higher than or equal to 1.50 and a low refractive index layer has a refractive index lower than 1.50.

2. The article as claimed in claim 1, in which the chroma C* is lower than or equal to 50.

3. The article as claimed in claim 1 o 2, in which the chroma C* is higher than or equal to 30 and preferably is strictly higher than 30.

4. The article as claimed in any one of the preceding claims, in which the hue angle ranges from 5° to 40° and preferably from 5° to 35°.

5. The article as claimed in any one of the preceding claims, in which the reflectance in the visible Rᵥ ≤ 30%, preferably Rᵥ ≤ 20%, and in particular Rᵥ ≤ 10%.

6. The article as claimed in any one of claims 1 to 4, in which the interference coating is an antireflection (AR) coating and has a reflectance Rᵥ < 2.5%.

7. The article as claimed in any one of claims 1 to 4 and 6, in which the interference coating comprises a stack of alternated layers of high refractive index, higher than or equal to 1.80, and of low refractive index, lower than 1.48.

8. The article as claimed in any one of claims 1 to 7, in which the one or more low index layers consist of SiO₂ and the one or more high refractive index layers consist of ZrO₂.

9. The article as claimed in one of the preceding claims, in which at least one of the two main faces of the substrate is already coated with one or more functional coatings chosen from: a primer layer for adhesion and/or shock resistance, an abrasion resistant coating, and/or a polarization coating, a photochromic coating.

10. The article as claimed in one of the preceding claims, in which the interference coating is coated with an anti-smudge coating, such as a hydrophobic and/or oleophobic coating.

11. The article as claimed in one of the preceding claims, **characterized in that** the interference coating is placed only on the front face of the article.

12. The article as claimed in one of the preceding claims, **characterized in that** the interference coating is placed on the front face and on the back face of the article.

13. The article as claimed in one of the preceding claims, in which the article is an optical article, in particular an ophthalmic lens.

14. The article as claimed in one of claims 1 to 4 and 7 to 13, in which said interference coating has a reflectance in the visible Rᵥ lower than or equal to 50%.
